Europäisches Patentamt

European Patent Office

Office européen des brevets

(19)

(11) **EP 0 717 019 B1**

(12) **EUROPÄISCHE PATENTSCHRIFT**

(45) Veröffentlichungstag und Bekanntmachung des Hinweises auf die Patenterteilung:
**06.10.1999 Patentblatt 1999/40**

(51) Int. Cl.$^6$: **C04B 35/532**, F16J 15/34

(21) Anmeldenummer: **95118810.1**

(22) Anmeldetag: **30.11.1995**

(54) **Gleitringdichtung aus Kohlenstoff**

Carbon axial face seal

Garniture étanche à anneau glissant en carbone

(84) Benannte Vertragsstaaten:
**DE FR GB IT NL SE**

(30) Priorität: **14.12.1994 DE 9419961 U**

(43) Veröffentlichungstag der Anmeldung:
**19.06.1996 Patentblatt 1996/25**

(73) Patentinhaber: **SGL CARBON AG**
**65203 Wiesbaden (DE)**

(72) Erfinder:
- **Thiele, Walter, Dr.-Ing.**
  **D-53179 Bonn (DE)**
- **Wislsperger, Ulrich, Dipl.-Ing.**
  **D-53175 Bonn (DE)**

(56) Entgegenhaltungen:
**DE-B- 1 008 071**

- **CHEMICAL ABSTRACTS, vol. 88, no. 18, 1.Mai 1978 Columbus, Ohio, US; abstract no. 123042, "Carbon sliding parts" XP002012734**
- **CHEMICAL ABSTRACTS, vol. 87, no. 14, 3.Oktober 1977 Columbus, Ohio, US; abstract no. 103647, "Carbon sliding contactor" XP002012735**
- **CHEMICAL ABSTRACTS, vol. 88, no. 18, 1.Mai 1978 Columbus, Ohio, US; abstract no. 123040, "Carbon sliding part" XP002012736**

## Beschreibung

Die Erfindung betrifft eine Gleitringdichtung, die ein erstes und ein Zweites sich relativ unter einem Anpreßdruck aneinander gleitend und dichtend bewegendes Teil aus Gegenlaufwerkstoffen, die entweder ganz oder im wesentlichen aus Kohlenstoff bestehen, enthält, wobei entweder das erste oder das zweite Teil aus einem ersten Werkstoff aus einem synthetischen, gebrannten, jedoch nicht graphitierten Kohlenstoffmaterial besteht, das aus einer Mischung der Zusammensetzung 30 bis 100 Gew.-% Petrolkoks und/oder Steinkohlenteerpechkoks und/oder graphitierter Petrolkoks und/oder graphitierter Steinkohlenteerpechkoks plus 0 bis 60 Gew.-% Naturgraphit und/oder synthetisch hergestellte Graphite aus der Gruppe Elektrographit, Kishgraphit, Lonzagraphit plus 0 bis 15 Gew.-% anorganische Zusätze und 25 bis 45 Gew.-% Bindepech, das auf Peche kondensierend wirkende Substanzen enthält, wobei sich der Prozentsatz des Bindepechs auf die Gesamtheit der Menge der nicht aus Pech bestehenden Bestandteile plus der Menge des Pechs gleich 100 Gew.-% bezieht, durch Formgeben und nachfolgendes Brennen der Formkörper hergestellt worden ist.

Für die Abdichtung von Wellen gegenüber Flüssigkeiten und Gasen in axialer Richtung, z.B. in Pumpen, werden heute überwiegend Gleitringdichtungen eingesetzt. Gleitringdichtungen bestehen im wesentlichen aus einem auf der Welle fest und fluiddicht montierten ersten Ring mit einer quer zur Längsrichtung der Welle stehenden Lauffläche gegen die ein stationärer, gegen das Gehäuse des Apparates abgedichteter zweiter Ring mit einer der Lauffläche des ersten Rings komplementären Lauffläche unter einem bestimmten Dichtdruck gepreßt wird. Die Laufflächen der zwei Ringe gleiten im Betrieb aneinander und bewirken die Abdichtung. Um eine zu große Reibung und damit einen zu großen Verschleiß zu vermeiden, müssen diese Laufflächen eine hohe Oberflächengüte aufweisen. Entscheidend für ein gutes Dauerbetriebsverhalten einer Gleitringdichtung ist jedoch die Auswahl geeigneter Materialpaarungen für die Laufringe. Diese Auswahl hängt einmal von der reibungstechnischen Verträglichkeit der gepaarten Werkstoffe und zum zweiten von den Betriebsbedingungen, beispielsweise davon ab, ob die Dichtung im Naßbetrieb oder im Trockenlauf oder unter niedriger oder hoher chemischer oder mechanischer Belastung betrieben wird. Übliche Paarungen für niedrige bis normale mechanische Belastungen sind z.B. Ringe aus synthetisch hergestelltem Kohlenstoff oder Ringe aus Phenolharzpreßmassen gegen gehärteten Stahl, Chromguß, Gußeisen oder Porzellan. Bei höheren mechanischen Belastungen wird die Paarung Kunstkohlenstoff gegen keramische Werkstoffe wie Aluminiumoxid, mit Silicium infiltriertes Siliciumcarbid oder Hartmetall bevorzugt.

Viele der genannten Werkstoffe haben jedoch Nachteile. Metallische Werkstoffe haben ein hohes Gewicht, was vor allem wegen der daraus im Betrieb resultierenden hohen dynamischen Kräfte konstruktiv berücksichtigt werden muß und sie sind gegen viele aggressive Agenzien chemisch nicht beständig. Die keramischen Werkstoffe haben ebenfalls ein vergleichsweise hohes Gewicht. Desweiteren werden sie insbesondere von alkalischen Medien angegriffen und lassen sich nur mit hohem Aufwand bearbeiten.

Diese Nachteile hat künstlich hergestellter Kohlenstoff nicht. Er ist einer der leichtesten Konstruktionswerkstoffe, ist, mit Ausnahme sehr starker Oxidantien, gegen alle Medien chemisch resistent und er läßt sich mit vertretbarem Aufwand bearbeiten.

Die Verwendung von Kohlenstoff-Kohlenstoffpaarungen wird auch in der Literatur vorgeschlagen (GB 1,050,298 und DE 1 008 071). Über die Zusammensetzung und die Qualität der miteinander gepaarten Kohlenstoffmaterialien ist diesen Schriften jedoch nichts zu entnehmen. In der deutschen Patentschrift wird allerdings ausdrücklich auf den Verschleiß der Kohlenstoffteile im Betrieb hingewiesen, der so erheblich ist, daß konstruktive Maßnahmen für eine leichte Auswechselbarkeit der gepaarten Kohlenstoffringe vorgesehen werden müssen. Zur Art und Qualität der miteinander kombinierten Gegenlaufwerkstoffe ist in einer älteren Firmenschrift der Ringsdorff-Werke Bonn vermerkt, daß sich für kritische Korrosionsprobleme auch die Paarung "Kunstkohle/Kunstkohle", d.h. die Paarung von Teilen aus synthetisch hergestelltem Kohlenstoff bewährt habe, daß aber für diesen Anwendungsfall spezielle Maßnahmen gegen einen verschleißbedingten Ausfall der Anordnung ergriffen werden müssen. Summiert ergibt der Stand der Technik folgendes:

- Die bekannten Kohlenstoff-Kohlenstoff-Materialpaarungen unterliegen einem hohen Verschleiß, der Wartungsmaßnahmen in vergleichsweise kurzen Intervallen erforderlich macht.

- Eine funktionsfähige Paarung von Teilen aus unterschiedlichen Kohlenstoffqualitäten in Gleitringdichtungen ist nicht bekannt.

Dieser Kenntnisstand wird durch die Erfahrungen der Anmelderin bestätigt. Neuere Versuche, bei denen in Gleitringdichtungen Teile aus gleichen oder bezüglich ihrer Rohstoffbasis ähnlichen Graphitmaterialien gegeneinander laufen gelassen wurden, ergaben für heutige betriebliche Standzeitanforderungen zu hohen Verschleiß. In den meisten Fällen fielen so ausgerüstete Gleitringdichtungen nach kurzer Zeit durch mit betrieblichen Maßnahmen nicht beherrschbaren Verschleiß wie z.B. Adhäsionsverschleiß irreparabel aus.

Der Erfindung lag daher die Aufgabe zugrunde, eine für die Gleitringe von Gleitringdichtungen geeignete Materialpaarung auf Basis künstlich hergestellten Kohlenstoffs zu schaffen, die im Betrieb im unteren und mittleren mechanischen Belastungsbereich mindestens gleich lange Standzeiten erreicht, wie die bis jetzt bekannten und bewährten Paarungen aus einem Kohlenstoff und einem nicht aus Kohlenstoff bestehenden Teil.

Die Aufgabe wird mit der Kombination der Merkmale des Patentanspruchs 1 gelöst. Die Unteransprüche geben bevorzugte Ausführungsformen der Erfindung wieder.

In der erfindungsgemäßen Lösung wird ein herkömmlicher, für Paarungen mit nicht aus Kohlenstoff bestehenden Werkstoffen wie Stahl, Chromguß oder Porzellan geeigneter, im wesentlichen aus Kohlenstoff bestehender erster Gleitwerkstoff gegen einen ebenfalls im wesentlichen aus Kohlenstoff bestehenden zweiten Werkstoff laufen gelassen, der als funktionswesentlichen Bestandteil einen kristallographisch vergleichsweise schlecht geordneten Graphit auf Basis Rußkoks enthält.

Die Bezeichnung Koks in Stoffnamen wie Petrolkoks, Steinkohlenteerpechkoks oder Rußkoks zeigt an, daß dieses Material nur bis zu Temperaturen mittlerer Höhe, d.h., von maximal 1400 °C erhitzt worden ist. Die Bezeichnung Graphit in den hier angegebenen Namen bedeutet, daß dieses Material in einem vorhergegangenen Verfahrensschritt auf Temperaturen in der Größenordnung von 2300 bis 3000 °C erhitzt worden ist. Der in der technischen Literatur und Umgangssprache zu findende Wortbestandteil "Kohle" kann sowohl Koks als auch Graphit oder beide Stoffe enthaltende Teile betreffen. Er ist jedoch irreführend, da in diesem Zusammenhang nicht eine Form von mineralisch vorkommender, kohlenwasserstoffhaltiger Kohle, sondern ein synthetisch hergestelltes technisches Produkt gemeint ist. Unter einem "gebrannten" Material wird in dieser Schrift ein Material verstanden, das bis maximal 1300 °C und unter einem "graphitierten" Material ein solches gesehen, das auf Temperaturen von 2300 bis 3100 °C erhitzt worden ist.

Der erste Werkstoff der erfindungsgemäßen Paarung wird folgendermaßen hergestellt: In einem ersten Schritt wird eine Trockengutmischung hergestellt. Mögliche Komponenten dieser Mischung sind, Petrolkoks in graphitierter und nicht graphitierter Form, Steinkohlenteerpechkoks in graphitierter und nicht graphitierter Form, Elektrographit - das ist ein durch ein elektrothermisches Verfahren synthetisch hergestellter polygranularer Graphit - Naturgraphit oder dem Naturgraphit ähnliche synthetische Graphite wie beispielsweise Lonza- oder Kish-Graphit und anorganische Zusatzstoffe wie beispielsweise Siliciumdioxid, natürliche und synthetische Silikate, Aluminiumoxid oder Siliciumcarbid. Alle Bestandteile der Tockengutkomponente müssen zu Mehlfeinheit aufgemahlen sein. Die Trockengutmischung kann zu 100 % aus Petrolkoks, aus Steinkohlenteerpechkoks, aus graphitiertem Petrolkoks oder aus graphitiertem Steinkohlenteerpechkoks allein oder aus Mischungen dieser Stoffe bestehen. Von den genannten Stoffen wird Petrolkoks bevorzugt. Für die meisten Anwendungen wird jedoch einer oder es werden mehrere der aufgeführten Kokse oder graphitierten Kokse in Mischung mit Natur- oder/und Elektrographit und mit einer oder mehr der angegebenen anorganischen, die Oberflächen- und Abrasionseigenschaften im Betrieb zusätzlich beeinflussenden Stoffe verwendet. Typische Mischungen der vorgenannten Art haben folgende Zusammensetzungen:

- 30 bis 100 Gew.-% Petrol- oder/und Steinkohlenteerpechkoks in graphitierter und/oder nicht graphitierter Form.
- 0 bis 60 Gew.-% Naturgraphit oder synthetisch hergestellter Graphit wie Elektrographit, Kishgraphit, Lonzagraphit.
- 0 bis 15 Gew.-% anorganische Zusätze.

Eine bevorzugte Mischung dieser Art besteht aus 45 bis 60 Gew.-% Koks, 35 bis 50 Gew.-% Graphit und 2 bis 12 Gew.-% anorganischen Zuschlagstoffen. Für die Kokskomponente wird hierfür Petrolkoks, für die Graphitkomponente kristallographisch gut geordneter Naturgraphit und die mineralische Komponente Siliciumdioxid bevorzugt verwendet. Eine nach den vorstehenden Beschreibungen zusammengesetzte Trockengutmischung wird sodann mit einem handelsüblichen Bindepech unter Zusatz oder in Gegenwart von auf Peche kondensierend wirkenden Substanzen wie z.B Schwefel, Sauerstoff bzw. Sauerstoff abgebenden Substanzen, Lewissäuren, chlorierten oder nitrierten Aromaten etc. bei Temperaturen, die erheblich über dem Erweichungspunkt des Bindepechs liegen, gründlich gemischt. Die zugesetzten Mengen Bindepech liegen je nach Zusammensetzung und Oberflächeneigenschaften des Trockenguts im Bereich von 25 bis 45 Gewichtsprozent, bezogen auf die Gesamtheit von Trockengut und Bindepech = 100 Gew.-%. Die genaue, anzuwendende Menge an Bindepech ermittelt der Fachmann durch einfach durchzuführende Versuche. Sollten beim Vermischen des feinpulverigen Trockenguts mit dem Pech Schwierigkeiten auftreten, können als zusätzliche Hilfen Peche verdünnende Mittel wie z.B. Teere, Anthracenöl oder geeignete organische Lösungsmittel in dem Fachmann bekannter Weise eingesetzt werden. Nach Abschluß des mit einer Kondensationsreaktion verbundenen Mischprozesses wird die Mischung in Preßformen gefüllt und zu Formkörpern verpreßt. Die so erhaltenen Formkörper werden sodann in sauerstofffreier Atmosphäre bis zu Produkttemperaturen von 800 bis 1300 °C, bevorzugt von 900 bis 1000 °C erhitzt und nach dem Abkühlen entweder zu Gleitringrohlingen oder zu für eine Imprägnierung geeigneten Formkörpern bearbeitet. Eine Imprägnierung ist im allgemeinen erforderlich, um die herstellungsbedingt porösen Körper fluiddicht zu machen. Bewährte Imprägniermittel sind Kunstharze, vorzugsweise Phenolharze, Metalle oder Metallegierungen, die bevorzugt Antimon enthalten. Die Imprägnierung wird nach den für die Imprägnierung von Gleitringdichtungsteilen aus Kohlenstoff bekannten Verfahren durchgeführt. Die imprägnierten Teile müssen dann noch auf die Form und Oberflächenbeschaffenheit der gewünschten Gleitringe endbearbeitet werden.

Der zweite Werkstoff der erfindungsgemäßen Paarung enthält als funktionswesentlichen Bestandteil Rußkoks in graphitierter Form. Rußkoks ist ein spezieller, im Handel nicht verfügbarer, jedoch dem auf dem Gebiet der Herstellung von synthetischen Kohlenstoffen und Graphitprodukten tätigen Fachmann bekannter Rohstoff. Möglichkeiten zur Herstellung von Rußkoks sind z.B. der deutschen Patentanmeldung PA 260 974 (v. 30.05.1951) oder der DE-Patentschrift Nr. 958 278 zu entnehmen. So hergestellte Rußkokse sind für die Herstellung erfindungsgemäßer Gleitringdichtungen geeignet.

Im folgenden wird die bei der Anmelderin verwendete Methode zur Herstellung graphitierten Rußkokses beschrieben. Als Ausgangsmaterial ist jeder Ruß geeignet. Vorzugsweise verwendet man über den Handel erhältliche Pigment- oder Füllerruße, die nach definierten Verfahren hergestellt worden sind und die geringe Gehalte an Asche und an gesundheitsschädlichen Kohlenwasserstoffen aufweisen, wobei bemerkt sei, daß Restgehalte an Kohlenwasserstoffen auf dem Ruß für die Rußkoksherstellung an sich nicht ungünstig sind. Ruß wird, gegebenenfalls unter Verwendung von das Einmischen erleichternden Hilfsmitteln wie Teeren, Ölen oder organischen Lösungsmitteln in dem Fachmann bekannter Weise mit einem verkokbaren, kohlenwasserstoffhaltigen Bindemittel zu einer formbaren, plastischen Masse gemischt. Vorzugsweise wird als Bindemittel ein handelsübliches Bindepech verwendet. Die zugesetzten Pechmengen liegen im Bereich von 35 bis 65 Gew.-%, bezogen auf die fertige Mischung = 100 Gew.-%. Der Mischprozeß wird in diesem Fall bevorzugt oberhalb des Erweichungspunktes oder -Bereichs des Bindepechs durchgeführt. Die so erhaltene Mischung wird dann zu Zwischenproduktkörpern geformt und es werden diese Formkörper unter Ausschluß oxidierend wirkender Medien zur Verkokung der enthaltenen Bindemittelkomponente bis zu Temperaturen von 800 bis 1400 °C Produkttemperatur erhitzt oder wie der Fachausdruck lautet, gebrannt. So behandelte Körper bestehen aus Rußkoks. Für die Herstellung dieses, aus dem zweiten Werkstoff bestehenden Teils der Dichtungspaarung wird graphitierter Rußkoks verwendet. Um diesen zu erhalten, müssen die gebrannten Rußkokskörper, wiederum unter Ausschluß von Oxidantien, zusätzlich auf Graphitierungstemperatur, d.h. auf Temperaturen von vorzugsweise 2300 bis 3000 °C erhitzt werden. Um ein für die Herstellung der Dichtungsteile für Gleitringdichtungen geeignetes Material zu erhalten, werden die Körper aus Rußkoksgraphit gebrochen und auf Mehlfeinheit gemahlen. Alle vorgenannten Verfahrensschritte wie Zerkleinern, Mischen, Formgeben, Brennen und Graphitieren sind als solche Stand der Technik. Es wird deshalb an dieser Stelle auf das Wissen der Fachwelt und die einschlägige Literatur verwiesen. Der zweite Werkstoff der erfindungsgemäßen Paarung wird hergestellt, indem eine Trockengutmischung hergestellt wird, die 30 bis 100 Gew.-% Rußkoks enthält. Die Mischungen, die zu weniger als 100 Gew.-% aus Rußkoks bestehen, enthalten zusätzlich einen oder mehrere der Bestandteile, die bereits bei der Beschreibung der Herstellung des ersten Werkstoffs für die erfindungsgemäße Materialpaarung genannt worden sind, nämlich synthetisch hergestellte Graphite, wie Elektrographit, Lonza-Graphit bzw. Kish-Graphit, Naturgraphit und anorganische Zusatzstoffe wie beispielsweise Siliciumdioxid, natürliche und synthetische Silikate, Aluminiumoxid oder Siliciumcarbid. Von diesen Zusätzen sind Elektrographit, kristallographisch gut geordneter Naturgraphit und Siliciumdioxid bevorzugt. Alle Komponenten der Trockengutmischung sind auf Mehlfeinheit gemahlen. Trockengutmischungen dieser Art haben folgende Zusammensetzungen:

- 30 bis 100 Gew.-%   Rußkoksgraphit
- 0 bis 55 Gew.-%   Naturgraphit oder synthetisch hergestellter Graphit (sowohl naturgraphitähnlicher als auch polygranularer Graphit)
- 0 bis 15 Gew.-%   anorganische Zusätze.

Eine bevorzugte Trockengutmischung besteht aus

- 60 bis 90 Gew.-%   Rußkoksgraphit
- 10 bis 38 Gew.-%   nicht auf Rußkoks basierendem Graphit
- 2 bis 12 Gew.-%   anorganischen Zuschlagstoffen.

Die Graphitkomponente besteht dabei vorzugsweise aus kristallographisch gut geordnetem Natur- oder polygranularem Elektrographit und die anorganische Komponente aus Siliciumdioxid. Die Trockengutkomponente wird sodann in gleicher Weise wie dies bereits für die Herstellung des ersten Werkstoffs für die erfindungsgemäße Paarung und des Rußkokses beschrieben worden ist, mit einem verkokbaren, organische Harze enthaltenden Bindemittel, oder Bindepech, vorzugsweise einem käuflichen Bindepech, dessen Erweichungspunkt nach Krämer-Sarnow (DIN 52 025) bevorzugt im Bereich von 70 bis 110 °C liegt, gemischt und danach zu Formkörpern gepreßt. Diese Formkörper können bereits die Grundform der gewünschten Gleitringe aber auch eine andere für die weitere Verarbeitung günstige Form haben. Die Formkörper werden sodann unter Ausschluß oxidierend wirkender Substanzen gebrannt, wobei bevorzugt Produkttemperaturen im Bereich von 800 bis 1300 °C erreicht werden. Nach Abkühlung der Körper in gegen Oxidation inerter Atmosphäre werden sie entweder mechanisch zu den gewünschten Gleitringkörpern bearbeitet oder, was überwiegend der Fall ist, einem Imprägnierschritt zugeführt. Dieser Inprägnierschritt dient dazu, die herstellungsbedingt porösen und damit für die meisten Anwendungen nicht geeigneten Körper fluiddicht zu machen. Dazu werden sie nach bekannten Verfahren mit Stoffen aus der Gruppe Kunstharze, Metalle, Metalllegierungen imprägniert, wobei als Harz Phenolharz und als Metall oder Legierungsbestandteil Antimon bevorzugt wird. Die imprägnierten Teile werden dann auf die im Einsatz als Gleitringdichtung erforderliche Form und Oberflächengüte endbearbeitet.

Erfindungsgemäße Gleitringdichtungen sind für den niedrigen bis mittelhohen Belastungsbereich geeignet. Die Belastungsbereiche werden durch das Produkt aus der Anpreßkraft des drehenden auf den stehenden Dichtungskörper und durch die Umfangsgeschwindigkeit des drehenden, rundscheibenförmigen Körpers an seiner äußeren Kante definiert (siehe Erhard Mayer, Axiale Gleitringdichtungen, VDI-Verlag 1974, S. 2). Niedrige Belastungen entsprechen Anpreßdrücken p von 0,1 $N/mm^2$ bei Umfangsgeschwindigkeiten v von $\leq$ 10 m/s (p $\cdot$ v $\leq$ 1 $N/mm^2$ x m/s), mittlere Belastungen p-Werten von $\leq$ 1 $N/mm^2$ und v-Werten von $\leq$ 10 m/s, wobei der p $\cdot$ v-Wert $\leq$ 5 $N/mm^2$ x m/s nicht überschreiten soll, während hohe Belastungen vorliegen, wenn p $\leq$ 5 $N/mm^2$ und v $\leq$ 20 m/s ist und der p $\cdot$ v-Wert 50 $N/mm^2$ x m/s nicht überschreitet. Erfindungsgemäße Materialpaarungen können noch mit Belastungswerten von p = 2 $N/mm^2$ und v = 10 m/s, d.h. einem p $\cdot$ v-Wert von 20 $N/mm^2$ x m/s betrieben werden. Sie sind sowohl für die Abdichtung gegen Flüssigkeiten (Naßlauf) und wegen der Trockenschmierwirkung des Graphits auch für die Abdichtung von Gasen geeignet.

Zum Nachweis der Funktionsfähigkeit und der Vorteile der Erfindung wurden erfindungsgemäße Werkstoffpaarungen im Vergleich zu bekannten Paarungen, in denen ein Ring aus Kohlenstoff gegen einen Ring aus einem metallischen oder keramischen Werkstoff läuft, auf einem Gleitringprüfstand getestet. Die dafür verwendeten, gegeneinander gelaufenen Teile waren aus den im Vorstehenden mit "erster Werkstoff" und "zweiter Werkstoff" beschriebenen Kohlenstoffqualitäten hergestellt worden. Die aus dem "ersten Werkstoff" hergestellten Testteile, nachfolgend jeweils mit "Testteil 1" bezeichnet, waren als solche nicht neu. Mit Teilen dieses Materialtyps waren auch bis jetzt schon Gleitringdichtungen ausgerüstet worden, in denen einer der Ringe aus Kohlenstoff bestanden hat. Dementsprechend wurden Gleitringe des Typs "Testteil 1" sowohl in den Versuchs- als auch in den Vergleichspaarungen als aus Kohlenstoff bestehende Gleitringe getestet. Die zweite Sorte der aus Kohlenstoff bestehenden Testteile, nachfolgend jeweils mit "Testteil 2" bezeichnet, bestand aus dem im Vorstehenden mit "zweiter Werkstoff" bezeichneten Werkstoff. Diese Sorte Testteile wurde nur in erfindungsgemäßen Gleitringpaarungen erprobt.

Der "erste Werkstoff" hatte folgende technische Daten:

Trockengutzusammensetzung

50 Gew.-%     Petrolkoks
48 Gew.-%     kristallin gut geordneter Naturgraphit
2 Gew.-%     Mineralien

Korngröße des Trockenguts:

Durchgang $d_{50\%}$ 15 $\mu$m
Durchgang $d_{95\%}$ 45 $\mu$m

Herstellungsverfahren wie vorbeschrieben.

Dichtimprägnierung mit Phenolharz

Die Gleitringe (Testteile 1) waren durch folgende Kennwerte charakterisiert:

| Härte (DIN 51917) | 105 |
|---|---|
| Dichte (DIN IEC 413) | 1,70 g/m$^3$ |
| Biegefestigkeit (DIN 51902) | 55 $N/mm^2$ |
| Wärmeleitfähigkeit (DIN 51908) | 14 W/mK |

Die technischen Daten des Werkstoffs ("zweiter Werkstoff") aus dem das jeweils zweite Teil der getesteten erfindungsgemäßen Paarung (Testteil 2) bestanden hat, sind folgende:

Trockengutzusammensetzung

75 Gew.-%     Rußkoksgraphit,
23 Gew.-%     kristalliner Naturgraphit
2 Gew.-%     Mineralien

Korngröße des Trockenguts:

Durchgang $d_{50\%}$ 17 $\mu$m
Durchgang $d_{95\%}$ 45 $\mu$m

Herstellungsverfahren wie vorbeschrieben.

Dichtimprägnierung mit Phenolharz

Die Gleitringe (Testteile 2) waren durch folgende Kennwerte charakterisiert:

| | |
|---|---|
| Härte (HR) (DIN 51917) | 100 |
| Dichte (DIN IEC 413) | 1,70 g/cm$^3$ |
| Biegefestigkeit (DIN 51902) | 50 N/mm$^2$ |
| Wärmeleitfähigkeit (DIN 51908) | 15 W/mK |

Die in den Testdichtungen gegeneinandergelaufenen Gleitringe hatten einen maximalen wirksamen Dichtungsdurchmesser von 54 mm. Sie entsprachen in Form und Oberflächenbeschaffenheit DIN 24960. Typ entlastete Einzeldichtung mit rotierender Befederung.

Die Prüfung wurde auf einem Prüfstand mit einer Gleitgeschwindigkeit von 9 m/s unter einem Anpreßdruck von 1,9 N/mm$^2$ durchgeführt. Das geförderte Medium, gegen das gedichtet werden sollte, war demineralisiertes Wasser.

Im folgenden sind die auf dem Prüfstand ermittelten Reibungsbeiwerte einer erfindungsgemäßen Paarung im Vergleich zu technisch bewährten Paarungen aus dem Testteil 1 ("erster Werkstoff" auf Basis Kohlenstoff) mit metallischen und keramischen Gegenlaufpartnern wiedergegeben.

| Erfindung: | Testteil 1/Testteil 2 | $\mu = 0,06$ |
|---|---|---|
| Vergleich: | Testteil 1/Chrom-Guß | $\mu = 0,09$ |
| | Testteil 1/Al$_2$O$_3$ | $\mu = 0,07$ |
| | Testteil 1/SiC | $\mu = 0,05$ |

Die Werte zeigen, daß der Gleitwiderstand der erfindungsgemäßen Paarung innerhalb der Gleitwiderstandswerte der betrieblich im großen Umfang mit Erfolg angewendeten Paarungen liegt. Die für die Beurteilung der Eignung für den dauernden betrieblichen Einsatz wichtigeren Abriebwerte sind in folgender Übersicht wiedergegeben:

Verschleiß ($\mu$m/h) beim Betrieb erfindungsgemäßer Gleitringpaarungen

| Gleitring(drehend) | Gegenring (stehend) |
|---|---|
| Testteil 1: 0,022 | Testteil 2: 0,074 |
| Testteil 2: 0,022 | Testteil 1: 0,098 |

Verschleiß ($\mu$m/h) beim Betrieb von Vergleichspaarungen:

| Gleitring (drehend) | Gegenring (stehend) |
|---|---|
| Chromguß : 0,084 | Testteil 1: 1,890 |
| Al$_2$O$_3$ : 0,102 | Testteil 1: 0,310 |
| SiSiC [1] : 0,038 | Testteil 1: 0,095 |
| Testteil 1: [2] | Testteil 1: [2] |

[1] mit Silicium infiltriertes SiC
[2] rapider Adhäsionsverschleiß, Paarung ist technisch unbrauchbar.

Die Meßwerte zeigen, daß erfindungsgernäße Gleitringpaarungen in beiden möglichen konstruktionstechnischen Kombinationen im Vergleich zu in der Praxis bewährten Gleitringpaarungen des Standes der Technik bessere Abriebwerte aufweisen.

Erfindungsgemäße Materialpaarungen für Gleitringdichtungen haben folgende Vorteile:

- Möglichkeit zur Erstellung leichterer Dichtungskonstruktionen durch Gewichtsersparnis (Cr-Guß 7,5 g/cm$^3$, Al$_2$O$_3$: 3,5 g/cm$^3$, SiSiC: 3,0 g/cm$^3$, Kohlenstoffgleitringe 1,7 g/cm$^3$).

- Durch Nutzung der hervorragenden Korrosionsbeständigkeit des Kohlenstoffs wird die Lösung kritischer Dichtungsaufgaben für das Arbeiten in korrosiver Umgebung ermöglicht.

- Im Vergleich zu bekannten Gleitringpaarungen, gleichgute oder bessere Standzeiten.

- Die beiden von der Rohstoffbasis her unterschiedlichen Dichtungswerkstoffe können sowohl für den sich drehenden als auch für den stehenden Ring (Gegenring) verwendet werden.

- Die Verschleißrate ist bei beiden Dichtungswerkstoffen unabhängig von ihrer Position in der Gleitringdichtung annähernd gleich. Dies führt im Zusammenwirken mit den niedrigen Abriebwerten zu einer Minimierung der Wartungsintervalle.

**Patentansprüche**

1. Gleitringdichtung, enthaltend ein erstes und ein zweites sich relativ unter einem Anpreßdruck aneinander gleitend und dichtend bewegendes Teil aus Gegenlaufwerkstoffen, die entweder ganz oder im wesentlichen aus Kohlenstoff bestehen, wobei entweder das erste oder das zweite Teil aus einem ersten Werkstoff aus einem synthetischen, gebrannten, jedoch nicht graphitierten Kohlenstoffmaterial besteht, das aus einer Mischung der Zusammensetzung

   30 bis 100 Gew.-% Petrolkoks und/oder Steinkohlenteerpechkoks und/oder graphitierter Petrolkoks und/oder graphitierter Steinkohlenteerpechkoks plus
   0 bis 60 Gew.-% Naturgraphit und/oder synthetisch hergestellte Graphite aus der Gruppe Elektrographit, Kishgraphit, Lonzagraphit plus
   0 bis 15 Gew. - % anorganische Zusätze
   und
   25 bis 45 Gew.-% Bindepech, das auf Peche kondensierend wirkende Substanzen enthält, wobei sich der Prozentsatz des Bindepechs auf die Gesamtheit der Menge der nicht aus Pech bestehenden Bestandteile plus der Menge des Pechs gleich 100 Gew.-% bezieht, durch Formgeben und nachfolgendes Brennen der Formkörper hergestellt worden ist,
   dadurch gekennzeichnet, daß
   das jeweils andere der zwei Teile aus einem zweiten Werkstoff aus einem synthetischen, gebrannten, jedoch nicht graphitierten Kohlenstoffmaterial besteht, das aus einer Mischung der Zusammensetzung
   30 bis 100 Gew.-% graphitierter Rußkoks plus
   0 bis 55 Gew.-% Naturgraphit und/oder synthetisch hergestellte Graphite aus der Gruppe Elektrographit, Kishgraphit, Lonzagraphit plus
   0 bis 15 Gew.-% anorganische Zusätze
   und
   25 bis 45 Gew.-% organische Harze enthaltendes Bindemittel oder Bindepech, wobei sich der Prozentsatz des Bindemittels oder des Bindepechs auf die Gesamtheit der Menge der nicht aus dem Bindemittel oder dem Bindepech bestehenden Bestandteile plus der Menge des Bindemittels oder Bindepechs gleich 100 Gew.-% bezieht, durch Formgeben und nachfolgendes Brennen der Formkörper hergestellt worden ist.

2. Gleitringdichtung nach Patentanspruch 1, dadurch gekennzeichnet, daß die fluidzugänglichen Poren des ersten oder des zweiten Werkstoffs soweit mit einem Stoff aus der Gruppe Kunstharze, Metalle, Metallegierungen gefüllt sind, daß der Werkstoff fluiddicht ist.

3. Gleitringdichtung nach Patentanspruch 1, dadurch gekennzeichnet, daß die fluidzugänglichen Poren des ersten und des zweiten Werkstoffs soweit mit einem Stoff aus der Gruppe Kunstharze, Metalle, Metallegierungen gefüllt sind, daß die Werkstoffe fluiddicht sind.

4. Gleitringdichtung nach einem der Patentansprüche 1 bis 3, dadurch gekennzeichnet, daß die in den Zusammensetzungen für das Herstellen des ersten und des zweiten Werkstoffs enthaltenen anorganischen Zusatzstoffe Stoffe aus der Gruppe Siliciumdioxid, natürliche und synthetische Silikate, Aluminiumoxid, Siliciumcarbid sind.

**Claims**

1. Axial face seal, containing a first portion and a second portion which move relatively to one another in a sliding and sealing manner under a contact pressure and are made of materials for counterrotation which consist either completely or substantially of carbon, with either the first or the second portion consisting of a first material which is made of a synthetic, baked, but not graphitised, carbon material which has been produced from a mixture having the composition

   30 to 100% by weight petroleum coke and/or coal derived pitch coke and/or graphitised petroleum coke and/or graphitised coal derived pitch coke, plus
   0 to 60% by weight natural graphite and/or synthetically produced graphite from the group electrographite, Kish graphite, Lonza graphite, plus
   0 to 15% by weight inorganic additives
   and
   25 to 45% by weight binder pitch, which contains substances which act in a condensing manner on pitches, with the percentage of the binder pitch relating to the whole of the amount of the components which do not consist of pitch plus the amount of the pitch, which is equal to 100% by weight,
   by shaping and subsequent baking of the formed body, characterised in that the respective other one of the two portions consists of a second material which is made of a synthetic, baked, but not graphitised, carbon material which has been produced from a mixture having the composition
30 to 100% by weight graphitised carbon black coke, plus
0 to 55% by weight natural graphite and/or synthetically produced graphite from the group electrographite, Kish graphite, Lonza graphite, plus
0 to 15% inorganic additives,
and
25 to 45% weight binding agent containing organic resins or binder pitch, with the percentage of the binding agent or the binder pitch relating to the whole of the amount of the components which do not consist of the binding agent or the binder pitch plus the amount of the binding agent or binder pitch, which is equal to 100% by weight,
by shaping and subsequent baking of the formed body.

2. Axial face seal according to claim 1, characterised in that the fluid-accessible pores of the first material or of the second material are filled with a substance from the group synthetic resins, metals, metal alloys to the extent that the material is fluid-tight.

3. Axial face seal according to claim 1, characterised in that the fluid-accessible pores of the first material and of the second material are filled with a substance from the group synthetic resins, metals, metal alloys to the extent that the materials are fluid-tight.

4. Axial face seal according to one of claims 1 to 3, characterised in that the inorganic additives contained in the compositions for producing the first material and the second material are from the group silicon dioxide, natural and synthetic silicates, aluminium oxide, silicon carbide.

**Revendications**

1. Garniture étanche à anneau glissant, comprenant une première partie et une deuxième partie, glissant l'une sur l'aùtre relativement et en développant un effet d'étanchéité sous l'effet d'une pression de pressage, les parties étant réalisées en des matériaux de antirotation, constitué soit totalement soit pratiquement totalement de carbone, soit la première soit la deuxième partie étant constituée d'un premier matériau venant d'un produit à base de carbone synthétique, cuit mais cependant pas graphité, constitué d'un mélange de composition de:

- 30 à 100% en poids de coke de pétrole et/ou de coke de brai d'houille et/ou de coke de pétrole graphité et/ou de coke de brai d'houille graphité, plus

- 0 à 60 % en poids de graphite naturel et/ou de graphite de fabrication synthétique issu du groupe du graphite électrique, du graphite Kish, du graphite Lonza, plus

- 0 à 15% en poids d'adjuvants non organiques, et

- 22 à 45% en poids de brai liante, contenant des substances agissant en se condensant sur la brai, le pourcentage du brai liante par rapport à la totalité de la quantité des composants non constitués par du brai, plus la quantité du brai, étant égale à 100 %,

par formage et cuisson subséquente des corps ayant été fabriqués par formage,
caractérisé en ce que chaque fois l'autre des deux parties est constituée d'un deuxième matériau composé d'un produit à base de carbone synthétique cuit mais cependant non graphité, constitué d'un mélange de composition de:

- 30 à 100 % en poids de coke de suie graphitées, plus

- 0 à 55 % en poids de graphite naturel et/ou de graphite de fabrication synthétique, issu du groupe du graphite électrique, du graphite Kish, du graphite Lonza, plus

- 0 à 15 % en poids d'adjuvants non organiques, et

- 25 à 45 % en poids de liant contenant des résines organiques ou de brai liante le pourcentage de liant ou de brai liante par rapport au total de la quantité des composants non constitués du liant ou du brai liante, plus la quantité de liant ou de brai liante, étant égale à 100 % en poids,

- par formage et cuisson subséquente des corps ayant été fabriqués par formage.

2. Garniture étanche à anneau glissant selon la revendication 1,
caractérisée en ce que
les pores accessibles aux fluides du premier ou du deuxième matériau sont remplies d'une substance issue du groupe des résines synthétiques, des métaux, des alliages métalliques, en une proportion faisant que le matériau soit étanche aux fluides.

3. Garniture étanche à anneau glissant selon la revendication 1,
caractérisée en ce que
les pores accessibles aux fluides du premier et du deuxième matériau sont remplies d'un substance issue du groupe des résines synthétiques, des metaux et des alliages métalliques, en une proportion faisant que les matériaux sont étanches aux fluides.

4. Garniture étanche à anneau glissant selon l'une des revendications 1 à 3, caractérisée en ce que les adjuvants non organiques contenus dans les compositions destinées à la fabrication du premier et du deuxième matériau sont des substances issues du groupe du dioxyde de silicium, des silicates et naturels et synthétiques, de l'oxyde d'aluminium, du carbure de silicium.